# EUROPÄISCHE PATENTSCHRIFT

(11) **EP 4 176 230 B1**
(45) Veröffentlichungstag und Bekanntmachung des Hinweises auf die Patenterteilung: **09.10.2024**
(21) Anmeldenummer: 21737675.5
(22) Anmeldetag: 01.07.2021
(51) Int. Cl.: G01C 21/00

(54) **VERFAHREN UND SYSTEM ZUM STEUERN EINES FLUGGERÄTS**
METHOD AND SYSTEM FOR CONTROLLING AN AIRCRAFT
PROCÉDÉ ET SYSTÈME DE COMMANDE D'UN AÉRONEF

(30) Priorität: 01.07.2020 EP 20183368
(43) Veröffentlichungstag der Anmeldung: 10.05.2023
(73) Patentinhaber: mdGroup Germany GmbH, 57072 Siegen (DE)
(72) Erfinder: KRECK, Martin, 57074 Siegen (DE)
(74) Vertreter: Glawe, Delfs, Moll
(86) Internationale Anmeldenummer: PCT/EP2021/068158
(87) Internationale Veröffentlichungsnummer: WO 2022/003097

(56) Entgegenhaltungen:
- FR-A1- 2 869 106
- US-B1- 9 542 849

## Beschreibung

Die Erfindung betrifft ein Verfahren und ein System zum Steuern eines Fluggeräts.

Es gibt Sperrgebiete, in die Fluggeräte nicht eindringen dürfen. Dazu gehören militärische Sperrbezirke, Sperrzonen im Bereich von Flughäfen und sonstige Gebiete, die nicht durch Fluggeräte beeinträchtigt werden sollen.

Wird eine vorgesehene Flugroute in ein Steuersystem eines Fluggeräts eingespeist, so wird zunächst geprüft, ob die Flugroute in Konflikt mit einem Sperrgebiet steht. Ist dies der Fall, so muss die Flugroute abgeändert werden. Wurde eine zulässige Flugroute gefunden, so kann das Fluggerät unter Berücksichtigung von zugehörigen geographischen Informationen entlang der Flugroute gesteuert werden.

Druckschrift US 9 542 849 B1 offenbart die Generierung und Anwendung von risikobasierter Flugroutendaten für unbemannte Fluggeräte. Druckschrift FR 2 869 106 A1 offenbart die Verwendung einer Ausbreitungsdistanztransformation, um eine Entfernung zu schätzen, wobei nur die Pfade berücksichtigt werden, die sowohl vom Fluggerät aufgrund seines vertikalen Flugprofils erreichbar sind als auch Überflugbeschränkungen entsprechen.

Die Berücksichtigung von geographischen Informationen ist erforderlich, damit das Fluggerät einen passenden Abstand zur Erdoberfläche einhält. Beispielweise kann das Fluggerät in einer Flughöhe von 400 m über Meeresspiegel gesteuert werden, wenn die geographische Höhe in der betreffenden Position 320 m über Meeresspiegel ist.

Eine Flugroute kann sich über geographische Sondergebiete erstrecken, in denen der Betrieb eines Fluggeräts bestimmten Einschränkungen unterliegt. Diese Einschränkungen können sich insbesondere auf bestimmte Betriebsparameter von Betriebskomponenten des Fluggeräts beziehen. Beispielsweise kann es sein, dass das Fluggerät bestimmte Leuchtsignale geben muss oder nicht geben darf, dass in dem Sondergebiet nur ein geräuschreduzierten Betrieb zulässig ist oder dass ein Fluggerät sich nur mit geringer Geschwindigkeit bewegen darf. Soll die Flugroute durch das Sondergebiet führen und der Betrieb des Fluggeräts an die Einschränkungen des Sondergebiets angepasst werden, ist neben geographischer Information die Berücksichtigung von in dem Sondergebiet geltenden Betriebsvorgaben erforderlich, damit das Fluggerät den Betrieb an die Einschränkungen anpassen kann.

Die Bereitstellung von Informationen über die Betriebsvorgaben zu den in Sondergebieten geltenden Einschränkungen erfordert bislang einigen Aufwand.

Der Erfindung liegt die Aufgabe zugrunde, ein Verfahren und ein System zum Steuern eines Fluggeräts vorzustellen, mit denen der Aufwand beim Bereitstellen von Informationen über in Sondergebiete geltende Einschränkungen vermindert wird. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren wird eine vorgesehene Flugposition des Fluggeräts mit einer zugeordneten geographischen Höheninformation abgeglichen. Die geographische Höheninformation wird aus einem Satz von Höheninformationen entnommen, der mit einem geographischen Gebiet korrespondiert, wobei der Satz von Höheninformationen für einen ersten Teil des geographischen Gebiets eine zutreffende geographische Höheninformation angibt und für einen zweiten Teil des geographischen Gebiets eine von der tatsächlichen geographischen Höhe abweichende Höheninformation angibt.

Die Erfindung geht aus von dem Gedanken, dass eine von der tatsächlichen geographischen Höhe abweichende Höheninformation genutzt werden kann, um Informationen über eine Betriebsvorgabe zu vermitteln, die in einem Sondergebiet einzuhalten ist. Mit der Erfindung wird ein Satz von Höheninformationen bereitgestellt, der für einen ersten Teil des abgedeckten geographischen Gebiets eine zutreffende geographische Höheninformation liefert. Dieser Teil des geographischen Gebiets kann dadurch definiert sein, dass es sich um ein Fluggebiet handelt, in dem das Fluggerät ohne Einschränkungen betrieben werden kann. Für den zweiten Teil des geographischen Gebiets wird anstatt der tatsächlichen Höheninformation eine von der tatsächlichen Höhe abweichende Höheninformation angegeben. Bei dem zweiten Teil des geographischen Gebiets handelt es sich um ein oder mehrere Sondergebiete, in denen das Fluggerät nur mit Einschränkungen betrieben werden darf, wobei die Einschränkung einen geräuschreduzierten Betrieb des Fluggeräts vorgibt und eine Antriebskomponente des Fluggeräts bei Eintritt in ein erstes Sondergebiet so angesteuert wird, dass ein vorgegebener Grenzwert für die Geräuschabgabe eingehalten wird, und/oder wobei die Einschränkung eine maximale oder minimale Fluggeschwindigkeit des Fluggeräts umfasst und eine Antriebskomponente des Fluggeräts bei Eintritt in das erste Sondergebiet so angesteuert wird, dass die Vorgabe für die Fluggeschwindigkeit eingehalten wird.

Gemäß der Erfindung wird aus dem Satz von Höheninformationen ein zweifacher Nutzen gezogen. Erstens wird die aus dem Satz entnommene Höheninformation zur Steuerung genutzt. Dazu kann aus einer geographischen Höheninformation ein Steuerbefehl abgeleitet werden, mit dem eine Antriebskomponente des Fluggeräts angesteuert wird. Beispielsweise kann anhand der geographischen Höheninformation eine Flugroute realisiert werden, mit der das Fluggerät auch bei unebenem Gelände einen konstanten Abstand zur Erdoberfläche einhält. Zweitens wird über den Satz von Höheninformationen eine Information vermittelt, in welchen Sondergebieten das Fluggerät nur mit Einschränkungen fliegen darf. Für diese Sondergebiete weicht die dem Satz von Höheninformationen entnommene Höheninformation von der tatsächlichen geographischen Höhe ab. Anhand der von der tatsächlichen Höhe abweichenden Höheninformation kann ein Steuerbefehl abgeleitet werden, mit dem eine Betriebskomponente des Fluggeräts an die Einschränkungen des Sondergebiets angepasst wird. Eine Betriebskomponente kann beispielsweise eine Beleuchtungseinrichtung, ein Funkmodul, oder an dem Fluggerät angebrachtes Zubehör sein. Erfindungsgemäß ist eine Betriebskomponente eine Antriebskomponente des Fluggeräts. Mit anderen Worten kann ein Steuerbefehl abgeleitet werden, mit dem ein Betriebsparameter einer Betriebskomponente des Fluggeräts gesteuert wird, um beispielsweise vorgegebene Leuchtsignale über eine Signalleuchte abzugeben, die Funkleistung von einem Funkmodul zu reduzieren oder die Geschwindigkeit des Fluggeräts zu limitieren.

Indem für Sondergebiete die tatsächliche Höheninformation durch eine von der tatsächlichen Höheninformation abweichende Information ersetzt wird, wird die Möglichkeit geöffnet, mit einem einheitlichen Satz von Informationen zwei Bedürfnisse bei der Steuerung des Fluggeräts abzudecken. Erstens werden die erforderlichen Navigationsinformationen zur Verfügung gestellt. Zweitens werden die Gebiete gekennzeichnet, in denen das Fluggerät nur mit Einschränkungen fliegen darf. Indem dies innerhalb eines einheitlichen Datensatzes geschieht, wird die Steuerung des Fluggeräts erheblich erleichtert. Ein Zugriff auf die Datenstruktur, in der die betreffende Information abgebildet ist, ist ohnehin erforderlich. Parallelstrukturen, mit denen geographische Informationen sowie Informationen über Sondergebiete separat voneinander ermittelt werden, werden überflüssig.

Auf die von der tatsächlichen Höhe abweichende Höheninformation für die Sondergebiete wird auf die gleiche Weise zugegriffen wie auf die tatsächlichen Höheninformationen der uneingeschränkten Fluggebiete. Obwohl es sich nicht um die Angabe einer tatsächlichen Höhe handelt, stellt sich die Höheninformation beim Zugriff so dar, als sei sie eine tatsächliche Höheninformation.

Eine geographische Position auf der Erdoberfläche lässt sich im Allgemeinen durch zwei Koordinaten definieren, beispielsweise durch Angabe einer Längenkoordinate und einer Breitenkoordinate. Als Höheninformation wird eine der geographischen Position zugeordnete Information bezeichnet, die die Höhenposition der dortigen Topographie angibt. Die Höhenposition kann relativ zu einer geeigneten Referenzhöhe wie beispielsweise dem Meeresspiegel angegeben werden. Die Höheninformation kann sich auf das Gelände beziehen und ggf. zusätzlich Bauwerke oder sonstige Strukturen auf dem Gelände berücksichtigen. Auf diese Weise kann sichergestellt werden, dass ein Fluggerät in einer Position, die höher liegt als die geographische Höhenangabe, nicht mit der Erdoberfläche oder dort angeordneten Strukturen kollidiert.

Für das Fluggerät kann ein Bereich zugänglicher Höhenpositionen definiert sein. Dieser Bereich kann nach unten hin begrenzt sein durch die tiefsten Positionen, die das Fluggerät einnehmen kann, also eine Position auf der Höhe des Meeresspiegels oder leicht darunter. Der Bereich kann nach oben hin begrenzt sein durch die höchsten Positionen, die das Fluggerät einnehmen kann, also beispielsweise eine Höhe von einigen 1000 m oberhalb des Meeresspiegels. Der Satz von Höheninformationen kann so gestaltet sein, dass die für einen zweiten Teil des geographischen Gebiets angegebene Höheninformation außerhalb des Bereichs zulässiger Höhenpositionen des Fluggeräts liegt.

In einer Ausführungsform gibt es einen festen Wert, der als Höheninformation für ein Sondergebiet steht. Dies kann beispielsweise ein Wert von 9999 m sein, der sich als einheitliche Höhenangabe über das gesamte Sondergebiet erstreckt. Es ist möglich, dass der feste Wert einheitlich für alle mit dem Satz von Höheninformationen abgedeckten Sondergebiete gilt. In einer alternativen Ausführungsform gibt es einen ersten festen Wert für eine erste Art Sondergebiet und eine davon abweichend Höheninformation für eine zweite Art Sondergebiet. Die abweichende Höheninformation für die zweite Art Sondergebiet kann ebenfalls ein fester Wert sein. Beispielsweise könnte mit einer Höheninformation von 9999 m eine erste Art Sondergebiet gekennzeichnet sein, in dem das Fluggerät die beim Eintreten in das Sondergebiet verwendete Flughöhe beibehalten muss und zusätzlich bestimmte Leuchtsignale geben muss. Mit einer Höheninformation von 9998 m könnte eine zweite Art Sondergebiet, in der ebenfalls die Flughöhe beibehalten werden muss und zusätzlich die Fluggeschwindigkeit einen vorgegebenen Wert nicht überschreiten darf.

In einer Ausführungsform wird die Erfindung verwirklicht, indem innerhalb der Höhenangabe ein oder mehrere weitere Datenfelder vorgesehen sind, in denen Informationen zur Art des Sondergebiets, zum Betrieb des Fluggeräts oder sonstige Betriebsvorgaben angegeben werden. Das Datenfeld kann eine zusätzliche Stelle in der Höhenangabe bilden, so dass der tatsächlichen Höheninformation eine Ziffer voran- oder nachgestellt wird. Die in dem Datenfeld angegebene Information kann eine eindimensionale Information, korrespondierend zu einer einzelnen zusätzlichen Ziffer, oder eine mehrdimensionale Information in Form eines Vektors sein, korrespondierend zu mehreren zusätzlichen Ziffern. Die Information kann sich auf Betriebsparameter von Betriebskomponenten des Fluggeräts beziehen. Umfasst beispielsweise das Fluggerät eine Betriebskomponente, die elektromagnetische Strahlung abgibt, so kann in dem Datenfeld die Information enthalten sein, dass die Leistung, mit der die elektromagnetische Strahlung abgegeben wird, einen vorgegebenen Schwellwert nicht überschreiten darf. Denkbar wäre auch, dass in dem Datenfeld die Information enthalten ist, dass das Fluggerät in der betreffenden geographischen Position nur in einem geräuschreduzierten Betriebsmodus betrieben werden darf. Ein geräuschreduzierter Betrieb kann beispielsweise darin bestehen, dass die Drehzahl und/oder oder die Leistung der Rotoren relativ zum Normalbetrieb reduziert wird. Bei einem Fluggerät, das einen hybriden Antrieb mit einem Elektromotor und einem Verbrennungsmotor umfasst, kann im geräuschreduzierten Betriebsmodus dem Elektromotor Vorrang gegeben werden vor dem Verbrennungsmotor. Denkbar wäre auch, dass in dem Datenfeld eine Information enthalten ist, wie Beleuchtungseinrichtungen und/oder Signalleuchten des Fluggeräts in der zugehörigen geographischen Position zu betreiben sind.

In dieser Ausführungsform umfasst die geographische Höheninformation sowohl eine tatsächliche Höheninformation als auch eine Betriebsvorgabe. Besteht die geographische Höheninformation beispielsweise aus fünf Ziffern, so kann die erste Ziffer eine Betriebsvorgabe und die nachfolgenden vier Ziffern eine tatsächliche Höheninformation vermitteln. Die erste Ziffer stellt dann das zusätzliche Datenfeld dar. In diesem Beispiel könnten tatsächliche geographische Höheninformationen bis zu 9999 m und 10 unterschiedliche Arten von Betriebsvorgaben für Sondergebiete vermittelt werden. Es ist vorteilhaft, wenn so viele Ziffern zur Vermittlung der tatsächlichen Höheninformation verwendet werden, dass der für das Fluggerät zugängliche Bereich vollständig abgedeckt wird. Das Vorhandensein eines Sondergebiets kann dann einfach daran erkannt werden, dass die geographische Höheninformation außerhalb des für das Fluggerät zugänglichen Bereichs liegt.

Mit anderen Worten kann die beispielhafte geographische Höheninformation 10150 m gemäß dieser Ausführungsform eine tatsächliche Höheninformation von 150 m und anhand der vorangestellten Ziffer 1 eine bestimmte Art von Sondergebiet vermitteln. Gemäß diesem Beispiel würde die geographische Höheninformation für ein uneingeschränktes Fluggebiet 00150 m lauten und somit nicht von der tatsächlichen geographischen Höhe von 150 m abweichen. Es ist natürlich auch denkbar, dass eine von diesem Beispiel verschiedene Anzahl von Ziffern zur Vermittlung der geographischen und nicht-geographischen Information verwendet wird und/oder dass die Informationen in anderer Reihenfolge angegeben werden. Vorteilhaft ist an dieser Ausführungsform, dass die tatsächliche geographische Höheninformation trotz der zusätzlichen Betriebsvorgabe einfach abzulesen ist.

Die Erfindung ist nicht auf eine bestimmte Art der Darstellung der Höheninformation eingeschränkt. Neben der oben erwähnten Möglichkeit, dass mit zwei Koordinaten eine geographische Position auf der Erdoberfläche bestimmt wird und dieser eine Höheninformation zugeordnet wird (Tile-Based Digital Elevation Model), ist beispielsweise auch eine Vektordarstellung möglich.

Es kann ein Steuersystem vorgesehen sein, das dazu ausgelegt ist, Steuerbefehle an Betriebskomponenten des Fluggeräts zu senden. Beispielsweise können Steuerbefehle an Antriebskomponenten gesendet werden, so dass das Fluggerät sich in eine vorgegebene Flugposition oder entlang einer vorgegebenen Flugroute bewegt. Erfindungsgemäß werden dabei die Antriebskomponenten so angesteuert, dass eine vorgegebene Fluggeschwindigkeit nicht überschritten wird und/oder das von dem Fluggerät abgegebene Geräusch unterhalb eines vorgegebenen Grenzwerts bleibt. Das Steuersystem kann Steuerbefehle auch an andere Betriebskomponenten senden, so dass der Betrieb des Fluggeräts mittels vorgegebener Betriebsparameter erfolgt. Es kann beispielsweise sein, dass eine Beleuchtungseinrichtung und/oder Signalleuchte eingeschaltet oder die Sendeleistung eines Funkmoduls reduziert wird. Das Steuersystem kann ein Element des Fluggeräts sein. Möglich ist auch, dass Elemente des Steuersystems in ein oder mehreren von dem Fluggerät separaten Modulen angeordnet sind.

Das Steuersystem kann eine Eingangsschnittstelle umfassen, über die eine gewünschte Flugroute oder eine gewünschte Flugposition in das Steuersystem eingegeben werden können. Das Steuersystem kann eine Recheneinheit umfassen, in der die über die Eingangsschnittstelle erhaltenen Informationen verarbeitet werden, um Steuerbefehle für die Betriebskomponenten des Fluggeräts zu ermitteln.

Das Steuersystem kann dazu ausgelegt sein, auf einen Datenspeicher zuzugreifen, in dem der Satz von Höheninformationen hinterlegt ist. Der Datenspeicher für den Satz von Höheninformationen kann ein Element des Steuersystems sein. Beispielsweise kann der Datenspeicher in dem Fluggerät angeordnet sein. Alternativ kann der Datenspeicher in einem von dem Fluggerät getrennten Modul angeordnet sein, beispielsweise in einem Fernsteuer-Modul. Von der Erfindung umfasst ist auch die Möglichkeit, dass die Höheninformationen aus einer von dem Steuersystem separaten Einrichtung über eine Datenverbindung abgerufen werden.

Wird beispielsweise über die Eingangsschnittstelle eingegeben, dass das Fluggerät ausgehend von seiner gegenwärtigen Position eine bestimmte Zielposition ansteuern soll, so kann eine Auswertung des Satzes von Höheninformationen ergeben, dass die Flugroute zu der Zielposition ein erstes Sondergebiet schneidet, innerhalb dessen das Fluggerät nur mit Einschränkungen betrieben werden darf. Das Steuersystem kann aus dem Satz von Höheninformationen die Betriebsvorgaben ableiten, die den Einschränkungen des ersten Sondergebiets entsprechen. Das Steuersystem kann dazu ausgelegt sein, anhand der Betriebsvorgaben geeignete Steuerbefehle für die Betriebskomponenten des Fluggeräts zu ermitteln.

Das erfindungsgemäße Verfahren kann so durchgeführt werden, dass eine Bedienperson über eine Schnittstelle Daten in das Steuersystem eingibt, so dass sich aus den Daten eine Flugroute für das Fluggerät ergibt. Beispielsweise kann in das Fernsteuer-Modul eine Zielposition eingegeben werden verbunden mit der Anweisung an das Fluggerät, sich von seiner gegenwärtigen Position zu der Zielposition zu bewegen. In dem Steuersystem kann eine geeignete Flugroute berechnet werden, entlang derer das Fluggerät seine Zielposition erreichen kann. In vielen Fällen wird es möglich sein, die Zielposition entlang eines direkten Wegs anzusteuern, so dass zum Ermitteln der Flugroute lediglich die Flughöhe so bestimmt werden muss, dass Hindernisse vermieden werden. Die passende Flughöhe ermittelt das Steuersystem unter Berücksichtigung der geographischen Höheninformationen. Nachdem das Steuersystem alle erforderlichen Daten für die Flugroute ermittelt hat, kann das Steuersystem eigenständig den Flug beginnen und die Antriebskomponenten des Fluggeräts mit geeigneten Steuerbefehlen ansteuern. Das Fluggerät kann die Zielposition ohne weitere Eingriffe der Bedienperson erreichen.

Ergibt die Abfrage der geographischen Höheninformationen durch das Steuersystem, dass die berechnete Flugroute von der gegenwärtigen Position zu der Zielposition ein erstes Sondergebiet schneidet, so ermittelt das Steuersystem die Betriebsparameter, die den Einschränkungen des Sondergebiets genügen. Bei Eintritt in das erste Sondergebiet steuert das Steuersystem die Betriebskomponenten des Fluggeräts anhand geeigneter Steuerbefehle an, die es aus den für das erste Sondergebiet geltenden Betriebsvorgaben ableitet. Beim Überfliegen des ersten Sondergebiets kann das Fluggerät den Einschränkungen des ersten Sondergebietes somit genügen.

Es kann auch sein, dass eine direkte Flugroute von der gegenwärtigen Position zu der Zielposition nicht möglich ist, weil diese ein zweites Sondergebiet in Form eines für Fluggeräte gesperrten Sperrgebiets schneiden würde. Es wird dann eine alternative Flugroute berechnet, die um das Sperrgebiet herumführt. In dem Satz von Höheninformationen kann die geographische Höhe für das zweite Sondergebiet so angegeben sein, dass sie die Information über das Sperrgebiet vermittelt. Für die Flugroute um das Sperrgebiet herum kann das Steuersystem wiederum auf Basis der geographischen Höheninformationen eine geeignete Flughöhe ermittelt. Sobald alle Informationen über die Flugroute vorliegen, kann das Fluggerät selbständig seinen Flug starten und der Flugroute folgen, auf der ein Konflikt mit dem Sperrgebiet vermieden wird.

Der zweite Teil des geographischen Gebiets kann zusätzlich oder alternativ dazu ein drittes Sondergebiet umfassen, in dem eine bestimmte Mindestflughöhe vorgegeben ist. Dies kann beispielsweise für einen Schifffahrtskanal gelten, bei denen Fluggeräte einen ausreichenden Abstand zum Wasserspiegel einhalten müssen, damit eine Kollision mit Schiffen vermieden wird. In dem Satz von Höheninformationen kann die geographische Höhe für das dritte Sondergebiet so angegeben sein, dass sie der vorgeschriebenen Mindestflughöhe entspricht. In einem solchen Fall kann das Steuersystem die Flugroute so berechnen, dass beim Überqueren des dritten Sondergebiets die vorgeschriebene Mindestflughöhe automatisch eingehalten wird.

Möglich ist auch, dass mit den von der Bedienperson über die Schnittstelle eingegebenen Daten eine bestimmte Flugroute für das Fluggerät vorgegeben wird. Die Vorgabe kann beispielsweise dergestalt sein, dass eine vorgegebene Strecke abgeflogen werden soll und dass dabei eine Flughöhe von 60 m eingehalten werden soll. Unter Berücksichtigung der geographischen Höheninformation kann das Steuersystem die Flugroute so berechnen, dass ein vertikaler Abstand von 60 m gegenüber dem Gelände bzw. dort errichteten Bauwerken eingehalten wird. Sobald die Flugroute vollständig berechnet ist, kann das Fluggerät diese selbständig abfliegen. Stellt sich anhand der geographischen Höheninformation heraus, dass die gewünschte Flugroute ein Sondergebiet schneidet, so kann eine Warnung an die Bedienperson ausgegeben werden, dass der Betrieb des Fluggeräts auf der vorgegebenen Flugroute bestimmten Einschränkungen unterliegt. Möglich ist, dass das Steuersystem unter Berücksichtigung der geographischen Höheninformation selbständig bei Eintritt in das Sondergebiet eine Anpassung der Betriebskomponenten an die Einschränkungen des Sondergebiets unternimmt.

Die Eingabe der Bedienperson in das Steuersystem kann auch so gestaltet sein, dass das Fluggerät die Vorgabe erhält, ein geographisches Gebiet abzufliegen, beispielsweise mit dem Ziel einen flächendeckenden Satz von Foto- oder Videoaufnahmen zu erhalten. Das Steuersystem kann aus dieser Vorgabe eine Flugroute berechnen, die beispielsweise durch eine Vielzahl von zueinander parallelen Flugbahnen das gesamte geographische Gebiet abdeckt. Bei der Ermittlung der Flugroute können die geographischen Höheninformationen berücksichtigt werden, so dass das Fluggerät einen konstanten Abstand zu den Strukturen am Boden einhält und dass die fotografischen Aufnahmen mit einem konsistenten Blickwinkel aufgenommen werden. Ergibt die Abfrage der geographischen Höheninformationen, dass sich das abzufliegende Gebiet mit einem Sondergebiet überschneidet, in dem beispielsweise das Erstellen fotographischer Aufnahmen verboten oder unerwünscht ist, so kann eine Fehlermeldung an die Bedienperson ergehen und das Steuersystem kann das Erstellen von fotographischen Aufnahmen über dem Sonderbiet unterbinden. Die Bedienperson kann ein alternatives geographisches Gebiet auswählen, das sich nicht mit einem solchen Sondergebiet überschneidet. Möglich ist auch, dass das Steuersystem selbsttätig eine Flugroute berechnet, mit der das geographische Gebiet nur teilweise abgedeckt wird und mit der das Sondergebiet vermieden wird.

Das Fluggerät kann ein unbemanntes Fluggerät sein. Es kann sich um ein Kleinfluggerät mit einem Abfluggewicht zwischen beispielsweise 1 kg und 100 kg, vorzugsweise zwischen 1 kg und 25 kg, weiter vorzugsweise zwischen 1 kg und 4 kg handeln. Das Fluggerät kann ein Multicopter sein mit einer Mehrzahl von Rotoren, die um im Wesentlichen vertikale Achsen rotieren. Der Multicopter kann beispielsweise vier, sechs oder acht Rotoren umfassen. Zu den Antriebskomponenten des Fluggeräts können insbesondere Antriebsmotoren für die Rotoren gehören, die mit Steuerbefehlen angesteuert werden können und mit einer vorgegebenen Drehzahl betrieben werden können.

Das Steuersystem kann eine in dem Fluggerät angeordnete Steuereinheit sowie ein von dem Fluggerät separates Fernsteuer-Modul umfassen. Zwischen dem Fluggerät und dem Fernsteuer-Modul kann eine Funkverbindung bestehen. Die Eingaben der Bedienperson können in das Fernsteuer-Modul erfolgen. Das Fernsteuer-Modul kann eine grafische Benutzeroberfläche und/oder einen Touchscreen umfassen. Die Berechnung der Flugroute kann in dem Fernsteuer-Modul erfolgen. Die fertig berechnete Flugroute kann an die Steuereinheit des Fluggeräts übertragen werden, so dass die Steuereinheit die geeigneten Steuerbefehle für die Antriebskomponenten des Fluggeräts ermitteln kann. Möglich ist auch, die Eingaben der Bedienperson über Funk an die Steuereinheit des Fluggeräts zu übertragen, so dass die Berechnung der Flugroute in der Steuereinheit des Fluggeräts erfolgen kann.

Bei der Ermittlung der Flugroute wird auf den in einem Datenspeicher hinterlegten Satz von Höheninformationen zugegriffen. Der Datenspeicher kann ein Element des Fluggeräts oder ein Element des Fernsteuer-Moduls sein. Der Datenspeicher kann ein fest installierter Datenspeicher sein oder ein austauschbarer Datenspeicher, beispielsweise in Form einer Speicherkarte. Möglich ist auch, dass zu dem Steuersystem eine von dem Fluggerät und dem Fernsteuer-Modul separate Komponente gehört, die den Datenspeicher umfasst. Der Satz von Höheninformationen kann auch in einer von dem Steuersystem separaten Einrichtung gespeichert sein. Die Abfrage der Daten kann über ein öffentliches Datennetz erfolgen, beispielsweise über ein Mobilfunknetz oder das Internet.

In einer Ausführungsform umfasst das Fluggerät alle Komponenten des Steuersystems. Das Fluggerät kann mit einer Schnittstelle ausgestattet sein, über das die erforderlichen Informationen in das Fluggerät eingegeben werden können. Den Satz von Höheninformationen kann das Fluggerät beispielsweise durch Einstecken einer Speicherkarte erhalten. Eine solche Gestaltung ist möglich für bemannte Fluggeräte und unbemannte Fluggeräte.

Die Erfindung betrifft auch ein Steuersystem für ein Fluggerät wie in Anspruch 9 definiert.

Das Steuersystem kann eine Steuereinheit des Fluggeräts umfassen, wobei die Steuereinheit dazu ausgelegt ist, anhand eines aus der geographischen Höheninformation abgeleiteten Steuerbefehls eine Betriebskomponente des Fluggeräts anzusteuern. Die Ableitung des Steuerbefehls aus der geographischen Höheninformation kann in dem Fluggerät oder in einer von dem Fluggerät separaten Komponente des Steuersystems erfolgen.

Das Steuersystem kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Steuersystems beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung eines erfindungsgemäßen Steuersystems;
- Fig. 2:: ein Blockdiagramm des Steuersystems aus Fig. 1;
- Fig. 3:: eine vorgesehene Flugroute;
- Fig. 4:: einen Ausschnitt aus einem Satz von Höheninformationen;
- Fig. 5:: eine mit einem erfindungsgemäßen Steuersystem ermittelte Flugroute;
- Fig. 6:: eine Eingabeschnittstelle eines erfindungsgemäßen Steuersystems;
- Fig. 7-10:: Beispiele für die Durchführung des erfindungsgemäßen Verfahrens.

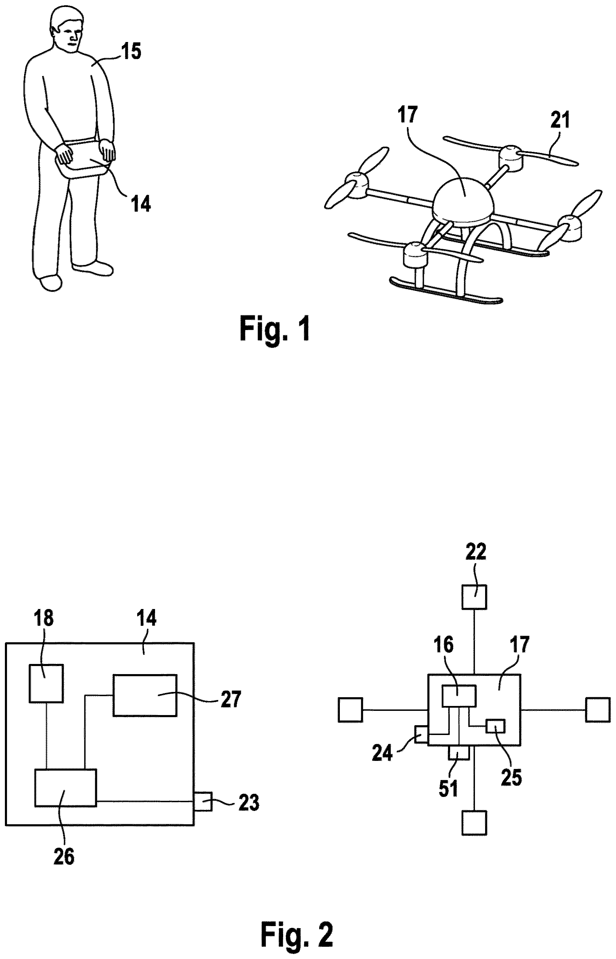

In dem Ausführungsbeispiel gemäß Fig. 1, 2 umfasst ein erfindungsgemäßes Steuersystem ein Fernsteuer-Modul 14, das von einer Person 15 bedient wird, sowie eine Steuereinheit 16, die in einem Fluggerät 17 angeordnet ist. Das Fluggerät 17 ist ein Quadcopter mit vier Rotoren 21 und jeweils einem Antriebsmotor 22 für jeden der Rotoren 21. Das Fluggerät umfasst eine Signalleuchte 51 zum Abgeben von Leuchtsignalen.

Das Fernsteuer-Modul 14 umfasst eine Eingabe-Schnittstelle 18 in Form eines Touchscreens mit grafisch dargestellten Bedienelementen 36. Über die Eingabe-Schnittstelle 18 gibt die Bedienperson 15 ein, dass das Fluggerät 17 sich von seiner gegenwärtigen Position 19 zu einer Zielposition 20 bewegen soll.

Zwischen einer Funkeinheit 23 des Fernsteuer-Moduls 14 und einer Funkeinheit 24 des Fluggeräts 17 besteht eine Funkverbindung. Über die Funkverbindung fragt das Fernsteuer-Modul 14 die gegenwärtige Position des Fluggeräts 17 ab. Die Information über die gegenwärtige Position wird in dem Fluggerät 17 durch eine GPS-Einheit 25 zur Verfügung gestellt.

Mit einer Recheneinheit 26 des Fernsteuer-Moduls 14 wird eine Flugroute zwischen der gegenwärtigen Position 19 und der Zielposition 20 berechnet. Bei der Berechnung wird auf geographische Höheninformationen zugegriffen, die in einem Datenspeicher 27 des Fernsteuer-Moduls 14 hinterlegt sind.

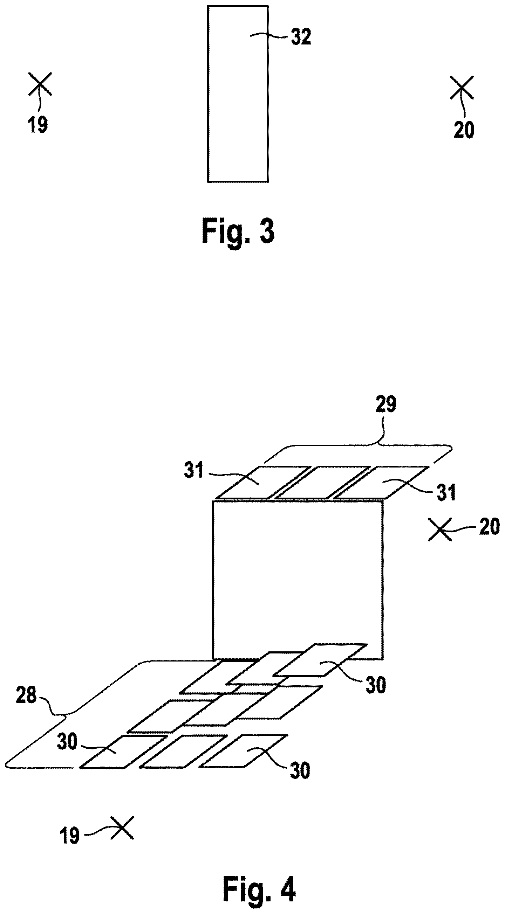

Gemäß der grafischen Darstellung in Fig. 4 umfasst der in dem Datenspeicher 27 hinterlegte Satz von Höheninformationen einen ersten Teilsatz 28, in dem eine tatsächliche Höheninformation 30 angegeben ist, und einen zweiten Teilsatz 29, in dem eine von der tatsächlichen Höhe abweichende Höheninformation 31 angegeben ist. Als tatsächliche Höheninformation 30 wird es bezeichnet, wenn die Angabe in dem Datenspeicher 27 den tatsächlichen topographischen Gegebenheiten an der betreffenden geographischen Position entspricht. Die Höhenangabe 30, deren Wert durch die vertikale Position innerhalb der perspektivischen Darstellung angedeutet ist, liegt in dem Teilsatz 28 zwischen 316 m und 324 m. Diese Angabe gibt die Höhe über dem Meeresspiegel an. Ein Fluggerät 17, das beispielsweise in 80 m Höhe über einer geographischen Höhe von 316 m fliegt, hätte eine Höhe von 396 m über dem Meeresspiegel.

In dem zweiten Teilsatz 29, der sich auf ein geographisches Sondergebiet 32 bezieht, in dem das Fluggerät 17 nur unter Einschränkungen genutzt werden darf, ist die Höhenangabe auf 10324 m gesetzt. Die Höhenangaben 31 in dem zweiten Teilsatz 29 entsprechen nicht der tatsächlichen geographischen Höhe. Die tatsächliche geographische Höhe liegt ähnlich wie in dem benachbarten Gebiet bei 324 m über dem Meeresspiegel. Diese Höhenangabe 31 ist in demselben Datensatz enthalten, in dem in dem ersten Teilsatz 28 die tatsächliche geographische Höhenangabe 30 gemacht wird.

In der Recheneinheit 26 ist festgeschrieben, dass nur die letzten vier Ziffern der Höhenangabe 31 einer tatsächlichen geographischen Höhe entsprechen. Durch die Höhenangabe 10324 m werden der Recheneinheit 26 daher eine geographische Information (die tatsächliche geographische Höhe von 324 m) und eine Betriebsvorgabe (die vorangestellte Ziffer 1) vermittelt. Die vorangestellte Ziffer 1 der Höhenangabe 10324 m vermittelt der Recheneinheit 26, dass das Fluggerät 17 in dem geographischen Sondergebiet 32 nur unter der Einschränkung betrieben werden darf, dass ein Lichtsignal über eine Signalleuchte abgegeben wird. Die Recheneinheit 26 ermittelt die Betriebsparameter, die den Einschränkungen genügen und die über die Funkverbindung zwischen den Funkeinheiten 23, 24 zu dem Fluggerät 17 übertragen werden. Die Steuereinheit 16 schaltet die Signalleuchte 51 anhand der übertragenen Betriebsparameter bei Eintritt in das geographische Sondergebiet 29 ein. In einem anderen Ausführungsbeispiel findet die Umsetzung von einer Höhenangabe 31 in Betriebsparameter zur Ansteuerung von Betriebskomponenten wie der Signalleuchte 51 direkt in der Steuereinheit 16 statt. Es werden dann lediglich geographische Höhenangaben 31 von dem Fernsteuer-Modul 14 an das Fluggerät 17 übertragen.

Erfindungsgemäß betrifft die Einschränkung über dem Sondergebiet 29 einen nur geräuschreduziert erlaubten Betrieb des Fluggeräts 17. Die Steuereinheit 16 steuert die Antriebsmotoren 22 anhand von empfangenen Betriebsparametern an und reduziert ihre Drehzahl und/oder Leistung, um dem geräuschreduzierten Betrieb zu genügen.

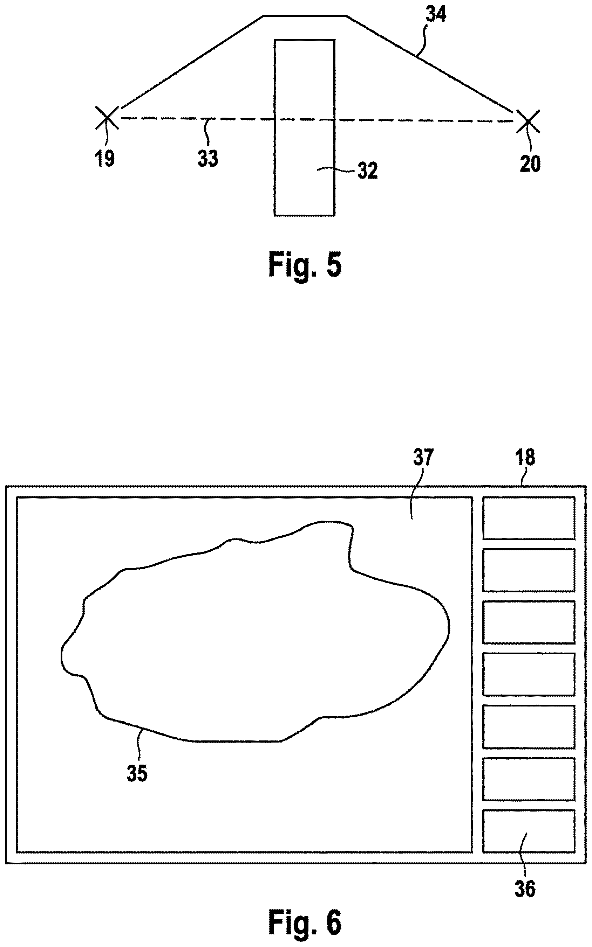

In dem Ausführungsbeispiel gemäß Fig. 5 führt die direkte Route 33 zwischen der gegenwärtigen Position 19 und der Zielposition 20 durch das Sondergebiet 32. Kann das Fluggerät 17 den Einschränkungen des Sondergebiets 32 nicht genügen, weil beispielsweise entsprechende Betriebskomponenten fehlen oder ausgefallen sind, so berechnet die Recheneinheit 26 eine Flugroute 34, die um das Sondergebiet 32 herumführt. Kann das Fluggerät 17 den Einschränkungen genügen, werden die Betriebskomponenten an die Einschränkungen angepasst und die direkte Flugroute 33 gewählt.

Die berechnete Flugroute 33, 34 wird über die Funkverbindung zwischen den Funkeinheiten 23, 24 zu dem Fluggerät 17 übertragen. Die Steuereinheit 16 des Fluggeräts 17 berechnet daraus und unter weiterer Berücksichtigung der von dem GPS-Modul 25 erhaltenen Daten Steuerbefehle für die Antriebsmotoren 22 des Fluggeräts 17. Das Fluggerät 17 fliegt unter der Kontrolle der Steuereinheit 16 entlang der Flugroute 33, 34 von der gegenwärtigen Position 19 zu der Zielposition 20. Dabei werden über die Funkverbindung 23, 24 laufend Daten über die aktuelle Position und den Flugzustand an das Fernsteuer-Modul 14 übermittelt.

Bei dem Ausführungsbeispiel gemäß Fig. 6 gibt die Bedienperson 15 über die Eingabe-Schnittstelle 18 des Fernsteuer-Moduls 14 ein geographisches Gebiet 35 ein, das mit dem Fluggerät 17 abgeflogen werden soll, um Fotoaufnahmen zu gewinnen. Die Eingabe-Schnittstelle 18 ist als Touchscreen mit einer Mehrzahl von grafisch dargestellten Bedienelementen 36 gestaltet.

Auf einem Teilabschnitt 37 des Touchscreens ist ein Ausschnitt einer Landkarte dargestellt. Das geographische Gebiet 35 wird eingegeben, indem es mit einem Touchpen auf der Landkarte eingezeichnet wird. Die Recheneinheit 26 des Fernsteuer-Moduls 14 übersetzt diese grafische Eingabe in eine Koordinatendarstellung. Auf Basis der Koordinatendarstellung werden die Höheninformationen aus dem Datenspeicher 27 abgerufen. Die Abfrage ergibt, dass das geographische Gebiet 35 sich mit einem Sondergebiet 32 überschneidet, in dem das Fluggerät 17 keine Fotoaufnahmen anfertigen und nur geräusch-reduziert betrieben werden darf. Der Rest des geographischen Gebiets 35 ist ein normales Fluggebiet 45, in dem ein Betrieb des Fluggeräts 17 uneingeschränkt zulässig ist.

Die Recheneinheit 26 erzeugt eine Fehlermeldung, die über die Eingabe-Schnittstelle 18 ausgegeben wird. Mit der Fehlermeldung wird die Bedienperson 15 aufgefordert, das geographische Gebiet 35 so zu ändern, dass eine Überschneidung mit dem Sondergebiet 32 vermieden wird, oder alternativ das geographische Gebiet 35 trotz der Einschränkungen des Sondergebiets 32 zu bestätigen. Wird das geographische Gebiet 35 bestätigt, genügt das Fluggerät 17 automatisch den Einschränkungen des Sondergebiets 32, indem es über dem Sondergebiet 32 keine Fotoaufnahmen anfertigt und geräusch-reduziert betrieben wird.

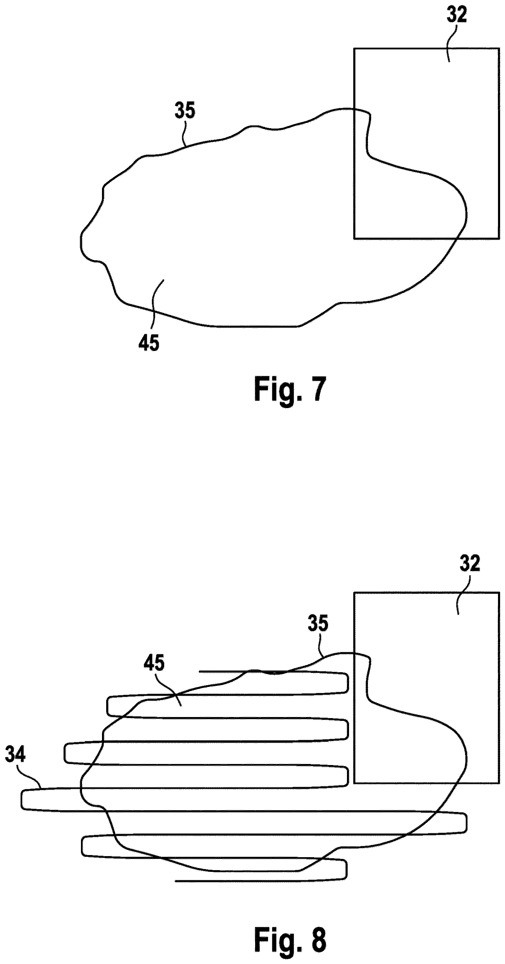

In Fig. 8 ist eine Variante dargestellt, bei der die Recheneinheit 26 zusätzlich zu der Fehlermeldung eine mögliche Flugroute 34 berechnet, mit der das geographische Gebiet 35 abgeflogen wird, soweit es ohne Überschneidung mit dem Sondergebiet 32 möglich ist. Die Bedienperson 15 hat die Möglichkeit, den Vorschlag zu bestätigen. Die Flugroute 34 wird dann über die Funkverbindung 23, 24 zu dem Fluggerät 17 übertragen, so dass das Fluggerät 17 die Flugroute 34 unter der Kontrolle der Steuereinheit 16 abfliegt. Während des Flugs werden über die Funkverbindung 23, 24 laufend aktuelle Fotoaufnahmen zu dem Fernsteuer-Modul 14 übertragen.

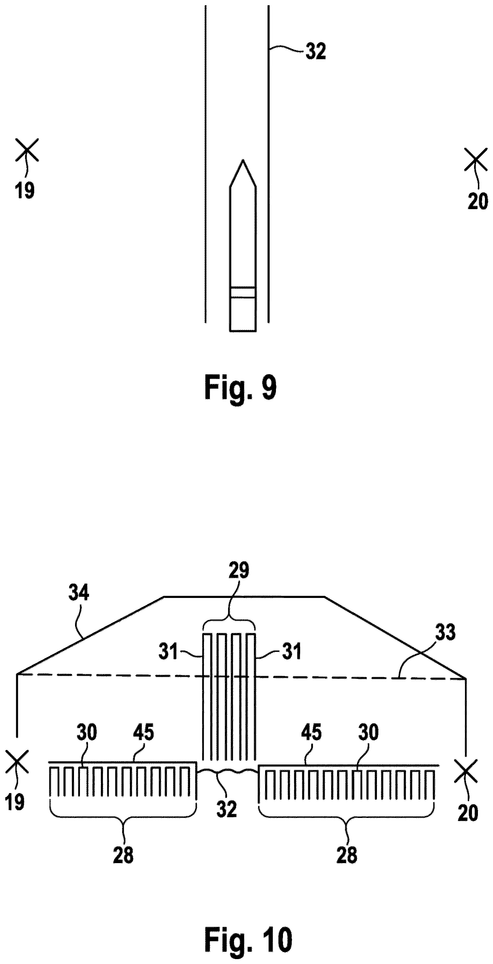

In dem Ausführungsbeispiel gemäß Fig. 9 ist das Sondergebiet 32 ein für die Schifffahrt genutzter Kanal. Damit es nicht zu einer Kollision zwischen Fluggeräten und Schiffen kommt, sind eine Mindestflughöhe von 50 m und das Einschalten einer Signalleuchte 51 beim Überqueren des Kanals vorgeschrieben. Der in dem Datenspeicher 27 hinterlegte Satz von Höheninformationen umfasst einen ersten Teilsatz 28, in dem die Höheninformation 30 der tatsächlichen geographischen Höhe entspricht. In dem Schifffahrtskanal entsprechenden Sondergebiet 32 wird in einem zweiten Teilsatz 29 eine von der tatsächlichen geographischen Höhe abweichende Höheninformation 31 angegeben.

Die Recheneinheit 26 erkennt nach der Abfrage der Höheninformationen 30, 31 aus dem Datenspeicher 27, dass der direkte Weg 33 zwischen der gegenwärtigen Position 19 und der Zielposition 20 in Konflikt mit dem Sondergebiet 32 steht. Die Betriebsvorgabe innerhalb der Höheninformation 31 vermittelt der Recheneinheit 26, dass das Fluggerät 17 nur in das Sondergebiet 32 eintreten darf, wenn die Flughöhe mindestens 50 m über der tatsächlichen geographischen Höhe liegt und die Signalleuchte 51 eingeschaltet ist. Die tatsächliche geographische Höhe entnimmt die Recheneinheit der tatsächlichen Höhenangabe innerhalb der geographischen Höheninformation 31. Die Betriebsparameter werden zu dem Fluggerät 17 übertragen. Das Fluggerät 17 fliegt unter Kontrolle der Steuereinheit 16 von der gegenwärtigen Position 19 zu der Zielposition 20 und genügt dabei den Einschränkungen des Sondergebiets 32, indem die Flughöhe angepasst und die Signalleuchte 51 eingeschaltet wird.

## Patentansprüche

1. Verfahren zum Steuern eines Fluggeräts (17), bei dem eine vorgesehene Flugposition des Fluggeräts (17) mit einer der vorgesehenen Flugposition entsprechenden geographischen Höheninformation (30, 31) abgeglichen wird, wobei die geographische Höheninformation aus einem Satz (28, 29) von Höheninformationen (30, 31) entnommen wird, der mit einem geographischen Gebiet (35) korrespondiert, wobei der Satz (28, 29) von Höheninformationen (30, 31) für einen ersten Teil (45) des geographischen Gebiets (35) eine zutreffende geographische Höheninformation (30) angibt und für einen zweiten Teil des geographischen Gebiets (35) eine von der tatsächlichen geographischen Höhe abweichende Höheninformation (31) angibt, wobei der zweite Teil des geographischen Gebiets (35) ein erstes Sondergebiet (32) umfasst, in dem das Fluggerät (17) nur unter einer Einschränkung betrieben werden darf und wobei die von der tatsächlichen geographischen Höhe abweichende Höheninformation (31) ausgewertet wird, um eine Betriebskomponente (22, 24, 51) des Fluggeräts (17) so anzusteuern, dass das Fluggerät (17) der Einschränkung genügt, wenn das Fluggerät (17) in dem ersten Sondergebiet (32)betrieben wird,
**dadurch gekennzeichnet, dass**
die Einschränkung einen geräuschreduzierten Betrieb des Fluggeräts (17) vorgibt und eine Antriebskomponente (22) des Fluggeräts (17) bei Eintritt in das erste Sondergebiet (32) so angesteuert wird, dass ein vorgegebener Grenzwert für die Geräuschabgabe eingehalten wird, und/oder wobei die Einschränkung eine maximale oder minimale Fluggeschwindigkeit des Fluggeräts (17) umfasst und eine Antriebskomponente (22) des Fluggeräts (17) bei Eintritt in das erste Sondergebiet (32) so angesteuert wird, dass die Vorgabe für die Fluggeschwindigkeit eingehalten wird.

2. Verfahren nach Anspruch 1, **dadurch gekennzeichnet, dass** die von der tatsächlichen geographischen Höhe abweichende Höheninformationen (31) eine geographische Information und eine Betriebsvorgabe enthält, wobei die geographische Information die tatsächliche Höhe umfasst.

3. Verfahren nach Anspruch 1 oder 2, **dadurch gekennzeichnet, dass** die von der tatsächlichen geographischen Höhe abweichende Höheninformation (31) ausgewertet wird, um die Flughöhe des Fluggeräts (17) im ersten Sondergebiet (32) festzulegen.

4. Verfahren nach einem der Ansprüche 1 bis 3, **dadurch gekennzeichnet, dass** aus der geographischen Höheninformation (30, 31) ein Steuerbefehl abgeleitet wird, mit dem das Fluggerät (17) in eine vorgegebene Position gesteuert wird.

5. Verfahren nach einem der Ansprüche 1 bis 4, **dadurch gekennzeichnet, dass** die für den zweiten Teil des geographischen Gebiets (35) angegebene Höheninformation (31) außerhalb des Bereichs zugänglicher Höhenpositionen des Fluggeräts (17) liegt.

6. Verfahren nach einem der Ansprüche 1 bis 5, **dadurch gekennzeichnet, dass** ein fester Wert definiert ist, der als Höheninformation (31) einem Sondergebiet (32) zugeordnet ist.

7. Verfahren nach einem der Ansprüche 1 bis 6, **dadurch gekennzeichnet, dass** der zweite Teil (35) des geographischen Gebiets (35) ein zweites Sondergebiet umfasst, wobei das zweite Sondergebiet ein Sperrgebiet ist, in dem das Fluggerät nicht betrieben werden darf.

8. Verfahren einem der Ansprüche 1 bis 7, **dadurch gekennzeichnet, dass** der zweite Teil (35) des geographischen Gebiets (35) ein drittes Sondergebiet umfasst, wobei das dritte Sondergebiet ein Gebiet mit vorgegebener Mindestflughöhe ist.

9. Steuersystem für ein Fluggerät (17), mit einer Recheneinheit (26), die eine vorgesehene Flugposition des Fluggeräts (17) mit einer der vorgesehenen Flugposition entsprechenden geographischen Höheninformation (30, 31) abgleicht, wobei die geographische Höheninformation aus einem Satz (28, 29) von Höheninformationen (30, 31) entnommen wird, der mit einem geographischen Gebiet (35) korrespondiert, wobei der Satz (28, 29) von Höheninformationen (30, 31) für einen ersten Teil (45) des geographischen Gebiets eine zutreffende geographische Höheninformation (30) angibt und für einen zweiten Teil des geographischen Gebiets eine von der tatsächlichen geographischen Höhe abweichende Höheninformation (31) angibt, wobei der zweite Teil des geographischen Gebiets (35) ein erstes Sondergebiet (32) umfasst, in dem das Fluggerät (17) nur unter einer Einschränkung betrieben werden darf und wobei die von der tatsächlichen geographischen Höhe abweichende Höheninformation (31) ausgewertet wird, um eine Betriebskomponente (22, 24, 51) des Fluggeräts (17) so anzusteuern, dass das Fluggerät (17) der Einschränkung genügt, wenn das Fluggerät (17) in dem ersten Sondergebiet (32) betrieben wird,
**dadurch gekennzeichnet, dass** die Einschränkung einen geräuschreduzierten Betrieb des Fluggeräts (17) vorgibt und eine Antriebskomponente (22) des Fluggeräts (17) bei Eintritt in das erste Sondergebiet (32) so angesteuert wird, dass ein vorgegebener Grenzwert für die Geräuschabgabe eingehalten wird, und/oder wobei die Einschränkung eine maximale oder minimale Fluggeschwindigkeit des Fluggeräts (17) umfasst und eine Antriebskomponente (22) des Fluggeräts (17) bei Eintritt in das erste Sondergebiet (32) so angesteuert wird, dass die Vorgabe für die Fluggeschwindigkeit eingehalten wird.

10. Steuersystem nach Anspruch 9, **dadurch gekennzeichnet, dass** das Steuersystem eine Steuereinheit (16) des Fluggeräts (17) umfasst und dass die Steuereinheit (16) dazu ausgelegt ist, anhand eines aus der geographischen Höheninformation (30, 31) abgeleiteten Steuerbefehls einen Betriebskomponente (22, 24, 51) des Fluggeräts anzusteuern.

11. Steuersystem nach Anspruch 9 oder 10, **dadurch gekennzeichnet, dass** das Fluggerät (17) ein unbemanntes Fluggerät ist.

## Claims

1. Method for controlling an aircraft (17), in which an intended flight position of the aircraft (17) is matched against an item of geographical elevation information (30, 31) that corresponds to the intended flight position, wherein the item of geographical elevation information is taken from a set (28, 29) of items of elevation information (30, 31) that corresponds to a geographical area (35), wherein the set (28, 29) of items of elevation information (30, 31) indicates, for a first part (45) of the geographical area (35), a true item of geographical elevation information (30) and, for a second part of the geographical area (35), an item of elevation information (31) that differs from the actual geographical elevation, wherein the second part of the geographical area (35) includes a first special area (32) in which the aircraft (17) may only be operated under a restriction, and wherein the item of elevation information (31) differing from the actual geographical elevation is evaluated in order to actuate an operating component (22, 24, 51) of the aircraft (17) such that the aircraft (17) complies with the restriction when the aircraft (17) is operated in the first special area (32),
**characterized in that**
the restriction specifies a noise-reduced operation of the aircraft (17), and, upon entry into the first special area (32), a drive component (22) of the aircraft (17) is actuated such that a specified limit value for noise emission is adhered to, and/or the restriction includes a maximum or minimum flight speed of the aircraft (17), and, upon entry into the first special area (32), a drive component (22) of the aircraft (17) is actuated such that the specification for the flight speed is adhered to.

2. Method according to Claim 1, **characterized in that** the item of elevation information (31) differing from the actual geographical elevation includes an item of geographical information and an operational specification, wherein the item of geographical information includes the actual elevation.

3. Method according to Claim 1 or 2, **characterized in that** the item of elevation information (31) differing from the actual geographical elevation is evaluated in order to define the flight altitude of the aircraft (17) in the first special area (32).

4. Method according to any one of Claims 1 to 3, **characterized in that** a control command, by means of which the aircraft (17) is controlled into a predefined position, is derived from the item of geographical elevation information (30, 31).

5. Method according to any one of Claims 1 to 4, **characterized in that** the item of elevation information (31) indicated for the second part of the geographical area (35) is outside the range of elevation positions accessible by the aircraft (17).

6. Method according to any one of Claims 1 to 5, **characterized in that** a fixed value is defined, which is assigned as an item of elevation information (31) to a special area (32).

7. Method according to any one of Claims 1 to 6, **characterized in that** the second part (35) of the geographical area (35) includes a second special area, wherein the second special area is a prohibited area in which the aircraft may not be operated.

8. Method according to any one of Claims 1 to 7, **characterized in that** the second part (35) of the geographical area (35) includes a third special area, wherein the third special area is an area having a predefined minimum flight altitude.

9. Control system for an aircraft (17) comprising a computing unit (26) that matches an intended flight position of the aircraft (17) against an item of geographical elevation information (30, 31) that corresponds to the intended flight position, wherein the item of geographical elevation information is taken from a set (28, 29) of items of elevation information (30, 31) that corresponds to a geographical area (35), wherein the set (28, 29) of items of elevation information (30, 31) indicates, for a first part (45) of the geographical area, a true item of geographical elevation information (30) and, for a second part of the geographical area, an item of elevation information (31) that differs from the actual geographical elevation, wherein the second part of the geographical area (35) includes a first special area (32) in which the aircraft (17) may only be operated under a restriction, and wherein the item of elevation information (31) differing from the actual geographical elevation is evaluated in order to actuate an operating component (22, 24, 51) of the aircraft (17) such that the aircraft (17) complies with the restriction when the aircraft (17) is operated in the first special area (32),
**characterized in that** the restriction specifies a noise-reduced operation of the aircraft (17), and, upon entry into the first special area (32), a drive component (22) of the aircraft (17) is actuated such that a specified limit value for noise emission is adhered to, and/or the restriction includes a maximum or minimum flight speed of the aircraft (17), and, upon entry into the first special area (32), a drive component (22) of the aircraft (17) is actuated such that the specification for the flight speed is adhered to.

10. Control system according to Claim 9, **characterized in that** the control system comprises a control unit (16) of the aircraft (17), and **in that** the control unit (16) is designed to actuate an operating component (22, 24, 51) of the aircraft on the basis of a control command derived from the item of geographical elevation information (30, 31).

11. Control system according to Claim 9 or 10, **characterized in that** the aircraft (17) is an unmanned aircraft.

## Revendications

1. Procédé de commande d'un aéronef (17), avec lequel une position de vol prévue de l'aéronef (17) est comparée à une information d'altitude (30, 31) géographique correspondant à la position de vol prévue, l'information d'altitude géographique étant extraite d'un ensemble (28, 29) d'informations d'altitude (30, 31) qui correspondent à une zone géographique (35), l'ensemble (28, 29) d'informations d'altitude (30, 31) indiquant une information d'altitude (30) géographique applicable pour une première partie (45) de la zone géographique (35) et indiquant une information d'altitude (31) différente de l'altitude géographique réelle pour une deuxième partie de la zone géographique (35), la deuxième partie de la zone géographique (35) comprenant une première zone spéciale (32) dans laquelle l'aéronef (17) n'est autorisé à être exploité que dans le cadre d'une restriction et l'information d'altitude (31) différente de l'altitude géographique réelle étant évaluée afin de commander un composant opérationnel (22, 24, 51) de l'aéronef (17) de telle sorte que l'aéronef (17) satisfasse à la restriction lorsque l'aéronef (17) est exploité dans la première zone spéciale (32),
**caractérisé en ce que**
la restriction prédéfinit un fonctionnement à bruit réduit de l'aéronef (17) et un composant d'entraînement (22) de l'aéronef (17), lors de l'entrée dans la première zone spéciale (32), est commandé de telle sorte qu'une valeur limite prédéfinie pour les émissions sonores est respectée, et/ou la restriction comprenant une vitesse de vol maximale ou minimale de l'aéronef (17) et un composant d'entraînement (22) de l'aéronef (17), lors de l'entrée dans la première zone spéciale (32), étant commandé de telle sorte que la consigne pour la vitesse de vol soit respectée.

2. Procédé selon la revendication 1, **caractérisé en ce que** l'information d'altitude (31) différente de l'altitude géographique réelle comprend une information géographique et une consigne opérationnelle, l'information géographique comprenant l'altitude réelle.

3. Procédé selon la revendication 1 ou 2, **caractérisé en ce que** l'information d'altitude (31) différente de l'altitude géographique réelle est évaluée en vue de spécifier l'altitude de vol de l'aéronef (17) dans la première zone spéciale (32).

4. Procédé selon l'une des revendications 1 à 3, **caractérisé en ce qu'**une instruction de commande est déduite de l'information d'altitude géographique (30, 31), avec laquelle l'aéronef (17) est commandé dans une position prédéfinie.

5. Procédé selon l'une des revendications 1 à 4, **caractérisé en ce que** l'information d'altitude (31) indiquée pour la deuxième partie de la zone géographique (35) se situe en dehors de la plage de positions d'altitude accessibles de l'aéronef (17).

6. Procédé selon l'une des revendications 1 à 5, **caractérisé en ce qu'**une valeur fixe est définie, laquelle est associée à une zone spéciale (32) en tant qu'information d'altitude (31).

7. Procédé selon l'une des revendications 1 à 6, **caractérisé en ce que** la deuxième partie (35) de la zone géographique (35) comprend une deuxième zone spéciale, la deuxième zone spéciale étant une zone interdite dans laquelle l'aéronef n'est pas autorisé à être exploité.

8. Procédé selon l'une des revendications 1 à 7, **caractérisé en ce que** la deuxième partie (35) de la zone géographique (35) comprend une troisième zone spéciale, la troisième zone spéciale étant une zone avec une altitude de vol minimale prédéfinie.

9. Système de commande pour un aéronef (17), comprenant une unité de calcul (26) qui compare une position de vol prévue de l'aéronef (17) à une information d'altitude (30, 31) géographique correspondant à la position de vol prévue, l'information d'altitude géographique étant extraite d'un ensemble (28, 29) d'informations d'altitude (30, 31) qui correspondent à une zone géographique (35), l'ensemble (28, 29) d'informations d'altitude (30, 31) indiquant une information d'altitude (30) géographique applicable pour une première partie (45) de la zone géographique et indiquant une information d'altitude (31) différente de l'altitude géographique réelle pour une deuxième partie de la zone géographique, la deuxième partie de la zone géographique (35) comprenant une première zone spéciale (32) dans laquelle l'aéronef (17) n'est autorisé à être exploité que dans le cadre d'une restriction et l'information d'altitude (31) différente de l'altitude géographique réelle étant évaluée afin de commander un composant opérationnel (22, 24, 51) de l'aéronef (17) de telle sorte que l'aéronef (17) satisfasse à la restriction lorsque l'aéronef (17) est exploité dans la première zone spéciale (32),
**caractérisé en ce que**
la restriction prédéfinit un fonctionnement à bruit réduit de l'aéronef (17) et un composant d'entraînement (22) de l'aéronef (17), lors de l'entrée dans la première zone spéciale (32), est commandé de telle sorte qu'une valeur limite prédéfinie pour les émissions sonores est respectée, et/ou la restriction comprenant une vitesse de vol maximale ou minimale de l'aéronef (17) et un composant d'entraînement (22) de l'aéronef (17), lors de l'entrée dans la première zone spéciale (32), étant commandé de telle sorte que la consigne pour la vitesse de vol soit respectée.

10. Système de commande selon la revendication 9, **caractérisé en ce que** le système de commande comprend une unité de commande (16) de l'aéronef (17) et **en ce que** l'unité de commande (16) est conçue pour commander un composant opérationnel (22, 24, 51) de l'aéronef à l'aide d'une instruction de commande dérivée de l'information d'altitude géographique (30, 31).

11. Système de commande selon la revendication 9 ou 10, **caractérisé en ce que** l'aéronef (17) est un aéronef sans pilote.
